# FASCICULE DE BREVET EUROPEEN

(11) **EP 1 873 455 B1**
(45) Date de publication et mention de la délivrance du brevet: **20.05.2015**
(21) Numéro de dépôt: 07075476.7
(22) Date de dépôt: 15.06.2007
(51) Int. Cl.: F23R 3/12, F23R 3/14, F23R 3/28, F23D 11/10, F23D 14/78

(54) **Dispositif d'injection d'un melange d'air et de carburant, chambre de combustion et turbomachine munies d'un tel dispositif**
Vorrichtung zum Einspritzen einer Mischung aus Luft und Treibstoff, Brennkammer und Strömungsmaschine, die mit einer solchen Vorrichtung ausgestattet ist
Device for injecting a mix of air and fuel, combustion chamber and turbomachine equipped with such a device

(30) Priorité: 29.06.2006 FR 0605849
(43) Date de publication de la demande: 02.01.2008
(73) Titulaire: SNECMA, 75015 Paris (FR)
(72) Inventeur: Commaret, Patrice André, 77950 Rubelles (FR); Guezengar, Dominique, 91290 Arpajon (FR); Hernandez, Didier Hippolyte, 77720 Quiers (FR); Lunel, Romain Nicolas, 77170 Brie Comte Robert (FR); Rollet, Pascale Valérie Cothilde, 91220 Le Plessis Pate (FR)
(74) Mandataire: Intès, Didier Gérard André

(56) Documents cités:
- EP-A- 1 314 933
- EP-A2- 1 253 380
- FR-A1- 2 753 779
- US-A- 3 982 392
- US-A- 4 429 538

## Description

L'invention se rapporte au domaine des turbomachines et concerne un dispositif d'injection d'un mélange d'air et de carburant dans une chambre de combustion.
Elle concerne plus précisément une nouvelle configuration de dispositif d'injection destiné à être monté dans un encombrement restreint d'une chambre de combustion

Un dispositif selon le préambule de la revendication 1 est connu par example du document EP 1 314 933 A.

Dans la suite de la description, les termes "amont" ou "aval" seront utilisés pour désigner les positions des éléments de structure les uns par rapport aux autres en direction axiale, en prenant pour référence le sens d'écoulement des gaz. De même, les termes "interne" ou "radialement interne" et "externe" ou "radialement externe" seront utilisés pour désigner les positions des éléments de structure les uns par rapport aux autres en direction radiale, en prenant pour référence l'axe de rotation de la turbomachine ou l'axe de symétrie de la structure considérée.

Une turbomachine comprend un ou plusieurs compresseur(s) délivrant de l'air sous pression à une chambre de combustion où l'air est mélangé à du carburant et allumé afin de générer des gaz de combustion chauds. Ces gaz s'écoulent vers l'aval de la chambre vers une ou plusieurs turbine(s) qui transforme(nt) l'énergie ainsi reçue afin d'entraîner en rotation le ou les compresseur(s) et fournir le travail nécessaire, par exemple, à la motorisation d'un avion.

Typiquement, une chambre de combustion utilisée en aéronautique comprend une paroi interne et une paroi externe, reliées entre elles à leur extrémité amont par un fond de chambre. Le fond de chambre présente, espacées circonférentiellement, une pluralité d'ouvertures recevant chacune un dispositif d'injection au milieu duquel se positionne un injecteur, l'ensemble permettant l'amenée du mélange d'air et de carburant dans la chambre.

La chambre de combustion est alimentée par du carburant liquide, mélangé à de l'air issu d'un compresseur. Le carburant liquide est amené jusqu'à la chambre par les injecteurs grâce auxquels il est vaporisé en fines gouttelettes. Cette vaporisation est initiée au niveau de l'injecteur et est poursuivie notamment au niveau du venturi et du bol par l'effet d'air sous pression provenant du compresseur. Cet air sous pression traverse, d'une part, la ou les vrilles radiales du dispositif d'injection pour mettre en rotation le carburant pulvérisé par l'injecteur, et, d'autre part, des orifices ménagés dans différentes parties du dispositif d'injection telles que le bol.

Comme illustré notamment dans les documents FR 2 753 779et EP 1 314 933 A, un dispositif d'injection possède une symétrie de révolution et comporte, disposés de l'amont vers l'aval, une traversée coulissante, liée par une coupelle annulaire à une vrille radiale interne. La vrille radiale interne est elle-même liée à une vrille radiale externe par un venturi, les vrilles radiales interne et externe étant co-rotatives, c'est à dire que l'air injecté dans le dispositif d'injection par ces deux vrilles a le même sens de rotation par rapport à l'axe de symétrie du dispositif d'injection. La vrille radiale externe est ensuite reliée par son extrémité aval à un bol à paroi conique divergente. Le bol est lui-même relié au fond de chambre par l'intermédiaire d'un déflecteur.
Un tel dispositif d'injection présente un diamètre extérieur, et donc un encombrement radial, relativement important et ne pouvant être diminué du fait de la présence de certains éléments tels que les vrilles radiales. Ce genre de dispositif est adapté grâce à ses dimensions relativement importantes pour recevoir un injecteur de type aéromécanique.

Il existe deux types d'injecteurs : les injecteurs aérodynamiques et les injecteurs aéromécaniques.
Les injecteurs aérodynamiques permettent d'injecter du carburant à une pression proche de celle de l'air qui est injecté au niveau du dispositif d'injection. Un seul circuit d'alimentation en carburant est nécessaire pour couvrir l'ensemble de la plage de débit de carburant que doit couvrir l'injecteur.

Dans les injecteurs aéromécaniques, le carburant est injecté à une pression bien supérieure à celle de la chambre de combustion. La vaporisation du carburant est de bonne qualité, y compris lorsque la pression dans la chambre est faible. Pour couvrir l'ensemble de la plage de débit de carburant tout en conservant une pression de carburant acceptable, deux circuits d'alimentation en carburant sont nécessaires, d'où un diamètre extérieur d'injecteur plus grand que pour un injecteur aérodynamique. Malgré cet encombrement plus grand, les injecteurs aéromécaniques permettent, entre autre, d'améliorer la pulvérisation du carburant ainsi que la combustion à bas débit.

Dans le cas où l'encombrement disponible pour loger le dispositif d'injection est réduit, par exemple dans le cas de turbomachines plus petites, le dispositif d'injection selon l'art antérieur ne peut pas être utilisé à cause de son diamètre extérieur trop grand. Il est donc nécessaire de trouver une nouvelle configuration de dispositif d'injection, garantissant une qualité de pulvérisation au moins aussi bonne que dans l'art antérieur, et qui puisse se loger dans un espace réduit, c'est à dire respecter une contrainte sur son diamètre extérieur.
De plus, un injecteur aéromécanique présentant certains avantages, il peut être intéressant voire nécessaire de conserver ce type d'injecteur, ce qui implique que le dispositif d'injection doit respecter une contrainte supplémentaire sur son diamètre intérieur, ce diamètre intérieur devant être suffisamment grand pour y disposer un injecteur aéromécanique.
L'encombrement radial disponible pour le dispositif d'injection étant ainsi diminué, il est par ailleurs nécessaire de disposer d'une section efficace, pour le passage de l'air sous pression dans les différents orifices du dispositif d'injection, équivalente à celle de l'art antérieur en terme d'effet sur la vaporisation, de façon à conserver une bonne qualité de pulvérisation.

L'objet de l'invention est de réaliser un dispositif d'injection respectant l'ensemble de ces contraintes.

L'invention permet de résoudre ce problème en proposant un dispositif d'injection dont la configuration, la géométrie et l'alimentation en air sous-pression sont telles que son diamètre extérieur est notablement réduit par rapport à l'art antérieur, tout en autorisant l'utilisation d'un injecteur aéromécanique et en conservant une section efficace pour le passage de l'air sous pression qui garantit une bonne qualité de pulvérisation.

Plus particulièrement, l'invention concerne un dispositif d'injection d'un mélange d'air sous pression et de carburant dans une chambre de combustion d'une turbomachine, le dispositif d'injection ayant une symétrie de révolution autour d'un axe longitudinal Y et comportant, disposés d'amont en aval dans le sens d'écoulement des gaz, une traversée coulissante au centre de laquelle est positionné un injecteur, une coupelle annulaire maintenant axialement la traversée coulissante, une vrille radiale interne munie d'aubes dirigeant l'air sous pression vers l'intérieur du dispositif d'injection, un venturi, la vrille radiale interne étant reliée par son extrémité aval à un bol, la traversée coulissante comportant, disposés de l'amont vers l'aval, une partie conique convergente, se prolongeant en une partie cylindrique et se terminant en un flasque annulaire s'étendant radialement vers l'extérieur, le bol comportant une paroi cylindrique externe se prolongeant en aval par un divergent muni, à son extrémité aval, d'une collerette ayant la forme d'un anneau s'étendant radialement vers l'extérieur, le divergent du bol étant relié, immédiatement en amont de la collerette, par une paroi de raccordement à un anneau cylindrique, l'anneau cylindrique et la paroi de raccordement formant un bec de liaison orienté vers l'amont. Un tel dispositif d'injection est remarquable en ce qu'au moins une rangée de trous tourbillonnaires est ménagée sur la paroi cylindrique externe du bol près de l'extrémité amont de la paroi cylindrique externe, et en ce que la paroi de raccordement du bec de liaison du bol est munie d'une rangée d'orifices de refroidissement inclinés axialement d'un angle γ par rapport à l'axe Y du dispositif d'injection.
Au moins une rangée d'orifices de purge peut de plus être ménagée sur la traversée coulissante, au niveau du raccordement entre sa partie cylindrique et son flasque annulaire.

Avantageusement, les orifices de purge sont inclinés axialement d'un angle α1 par rapport à l'axe du dispositif d'injection, l'angle α1 étant de préférence compris entre 0 et 45 degrés.
Les orifices de purge peuvent aussi être inclinés selon une direction tangentielle à la paroi cylindrique de la traversée coulissante d'un angle β1 par rapport à l'axe du dispositif d'injection. Préférentiellement, l'angle β1 est compris entre 0 et 60 degrés.
Les orifices de purges et les aubes de la vrille radiale interne peuvent être co-rotatifs.
Selon un mode préféré de réalisation de l'invention, la vrille radiale interne comportant un nombre n d'aubes, la traversée coulissante comporte un nombre d'orifices de purge qui est un sous multiple de n. Il peut être alors avantageux d'intercaler les orifices de purges entre les aubes.
Les trous tourbillonnaires sont inclinés axialement d'un angle α2 par rapport à l'axe du dispositif d'injection, l'angle α2 étant préférentiellement compris entre 30 et 90 degrés.
Les trous tourbillonnaires peuvent aussi être inclinés selon une direction tangentielle à la paroi cylindrique externe du bol d'un angle β 2 par rapport à l'axe du dispositif d'injection. Préférentiellement, l'angle β2 est compris entre 0 et 90 degrés. Les trous tourbillonnaires et les aubes de la vrille radiale interne peuvent être co-rotatifs ou contra-rotatifs.
Préférentiellement, les orifices de refroidissement comportent une extrémité aval disposée en face et sensiblement à mi-hauteur de la collerette du bol.
De façon avantageuse, le venturi comportant une surface interne composée d'une première surface convergente reliée à une seconde surface divergente par un rayon de raccordement, la première surface convergente forme un cône de révolution dont l'axe est celui du dispositif d'injection. La seconde surface divergente du venturi peut elle aussi former un cône de révolution dont l'axe est celui du dispositif d'injection.
Par ailleurs, l'invention concerne aussi une chambre de combustion comprenant une paroi interne, une paroi externe, un fond de chambre et munie d'au moins un tel dispositif d'injection.

L'invention concerne enfin une turbomachine munie d'une telle chambre de combustion.

L'invention sera mieux comprise et d'autres avantages de celle-ci apparaîtront plus clairement à la lumière de la description d'un mode préféré de réalisation, donnée à titre d'exemple non limitatif et faite en référence aux dessins annexés, dans lesquels :
- la figure 1 est une vue schématique en coupe d'une turbomachine et plus précisément d'un turboréacteur d'avion ;
- la figure 2 est une vue en perspective d'un dispositif d'injection selon l'invention ;
- la figure 3 est une vue schématique en coupe d'un dispositif d'injection selon l'invention ;
- la figure 4 est une vue schématique de dessus d'un dispositif d'injection selon l'invention ;
- la figure 5 est une vue schématique en coupe d'un dispositif d'injection selon une première variante de l'invention ;
- la figure 6 est une vue schématique de dessus et en coupe d'un dispositif d'injection selon la première variante de l'invention ;
- la figure 7 est une vue d'une partie d'un dispositif d'injection selon l'invention, vu de l'aval ;
- la figure 8 est une vue schématique de dessus d'un dispositif d'injection selon l'invention ;
- la figure 9 est une vue en coupe d'une partie d'un dispositif d'injection selon l'invention ;
- la figure 10 est une vue de détail en coupe d'une autre partie d'un dispositif d'injection selon l'invention.

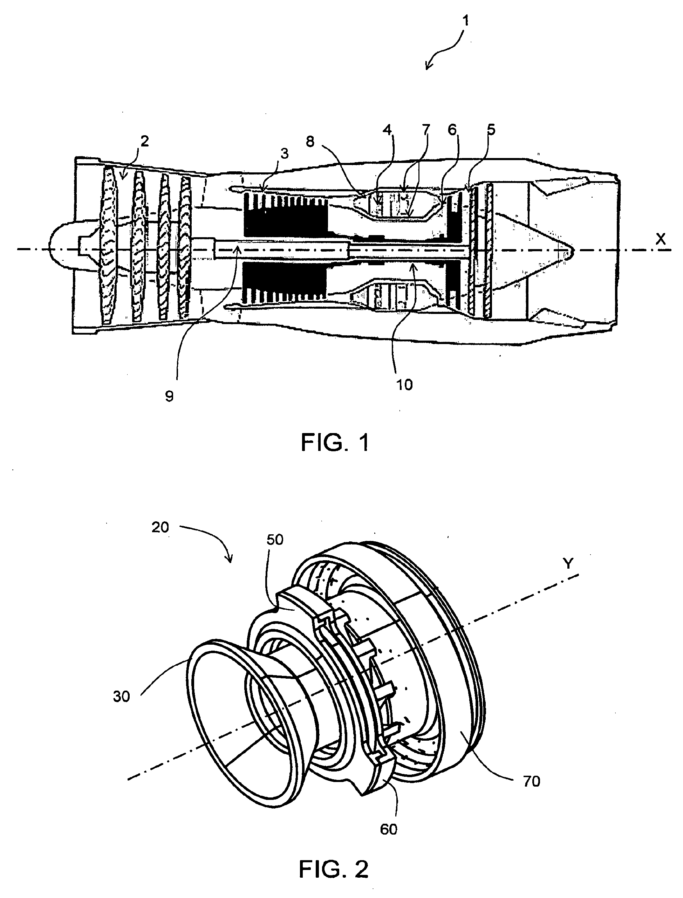

La figure 1 montre en coupe une vue d'ensemble d'une turbomachine 1, par exemple un turboréacteur d'avion, comprenant un compresseur basse pression 2, un compresseur haute pression 3, une chambre de combustion 4, une turbine basse pression 5 et une turbine haute pression 6. La chambre de combustion 4 peut être du type annulaire et est délimitée par deux parois annulaires 7 espacées radialement par rapport à l'axe X de rotation du turboréacteur, et reliées à leur extrémité amont à un fond de chambre annulaire 8. Le fond de chambre 8 comporte une pluralité d'ouvertures (non représentées), régulièrement espacées circonférentiellement. Dans chacune de ces ouvertures est monté un dispositif d'injection. Les gaz de combustion s'écoulent vers l'aval dans la chambre de combustion 4 et alimentent ensuite les turbines 5 et 6 qui entraînent respectivement les compresseurs 2 et 3 disposés en amont du fond de chambre 8, par l'intermédiaire respectivement de deux arbres 9 et 10. Le compresseur haute pression 3 alimente en air les dispositifs d'injection, ainsi que deux espaces annulaires disposés radialement respectivement à l'intérieur et à l'extérieur de la chambre de combustion 4. L'air introduit dans la chambre de combustion 4 participe à la vaporisation du carburant et à sa combustion. L'air circulant à l'extérieur des parois de la chambre de combustion 2 participe au refroidissement de ces parois et pénètre dans la chambre par des trous de dilution (non représentés) afin de refroidir les gaz de combustion transmis à la turbine.

La figure 2 montre une vue en perspective d'un dispositif d'injection 20 selon l'invention.
Le dispositif d'injection 20 possède une symétrie de révolution d'axe Y. Il comporte, disposés de l'amont vers l'aval, une traversée coulissante 30, au centre de laquelle se positionne un injecteur 40 (représenté sur les figures suivantes), une coupelle annulaire 50 maintenant axialement la traversée coulissante 30 et la liant à une vrille radiale interne 60, la vrille radiale interne 60 étant liée en aval à un bol 70.

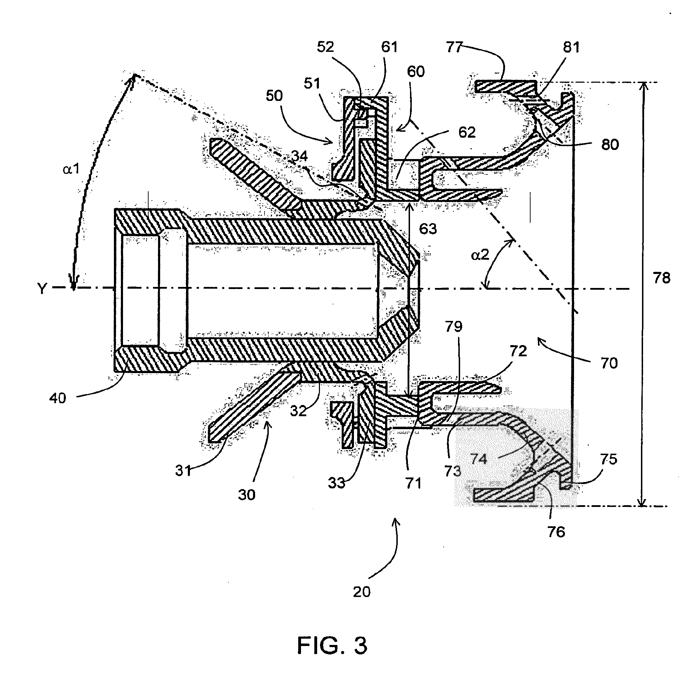

Comme illustré à la figure 3 qui représente une vue schématique en coupe d'un dispositif d'injection selon l'invention, la traversée coulissante 30 est composée d'une partie amont conique convergente 31 se prolongeant en une partie cylindrique 32 d'axe Y, cette partie cylindrique étant munie à son extrémité aval d'un flasque annulaire 33 s'étendant radialement vers l'extérieur. La partie conique convergente 31 est inclinée à 45° environ par rapport à l'axe Y et a pour fonction de guider l'injecteur 40 lors de son montage dans le dispositif d'injection. Le maintien axial de la traversée coulissante par la coupelle annulaire 50 est effectué au niveau du flasque annulaire 33. La coupelle annulaire 50 comporte un flasque annulaire 51 s'étendant radialement vers l'extérieur. Son extrémité radiale extérieure se termine par un bec annulaire cylindrique 52 d'axe Y dirigé vers l'aval. La coupelle annulaire 50 est reliée à une vrille radiale interne 60 par l'intermédiaire de son bec annulaire 52. Ce bec annulaire 52 est lié, par exemple par brasage, à un bec 61 de forme correspondante disposé à l'extrémité amont extérieure de la vrille radiale interne 60. Un espace peut être ménagé axialement entre le flasque annulaire 51 et la vrille radiale interne 60 de façon à autoriser le débattement radial de la traversée coulissante 30. Ce débattement permet de compenser les déplacements relatifs existant en fonctionnement entre l'injecteur 40 et le dispositif d'injection 20. La vrille radiale interne 60 est reliée par son extrémité aval à un bol 70.
Dans l'exemple illustré ici, le bol 70 comporte un flasque annulaire 71 s'étendant radialement vers l'extérieur. Le flasque annulaire 71 relie une première paroi interne 72, encore appelée venturi, à une seconde paroi cylindrique externe 73, d'axe Y, par leurs extrémités amonts respectives. La seconde paroi cylindrique externe 73 se prolonge en aval par un divergent 74. Le divergent 74 est muni, à son extrémité aval, d'une collerette 75. La collerette 75 a la forme d'un anneau s'étendant radialement vers l'extérieur. Immédiatement en amont de la collerette 75, une paroi de raccordement 76 relie le divergent 74 à un anneau cylindrique 77 d'axe Y. La paroi de raccordement 76 peut être orthogonale à l'axe Y du dispositif de refroidissement ou inclinée de façon à ce que son extrémité amont ait un diamètre plus grand que son extrémité aval. Le bol 70 est relié à un déflecteur (non représenté) par l'intermédiaire de son anneau cylindrique 77. L'anneau cylindrique 77 et la paroi de raccordement 76 forment un bec de liaison orienté vers l'amont et dont le diamètre extérieur 78 correspond au diamètre extérieur du dispositif d'injection 20, et détermine son encombrement radial.

Afin d'alimenter le dispositif d'injection 20 en air sous pression, différents orifices sont ménagés sur ce dernier.

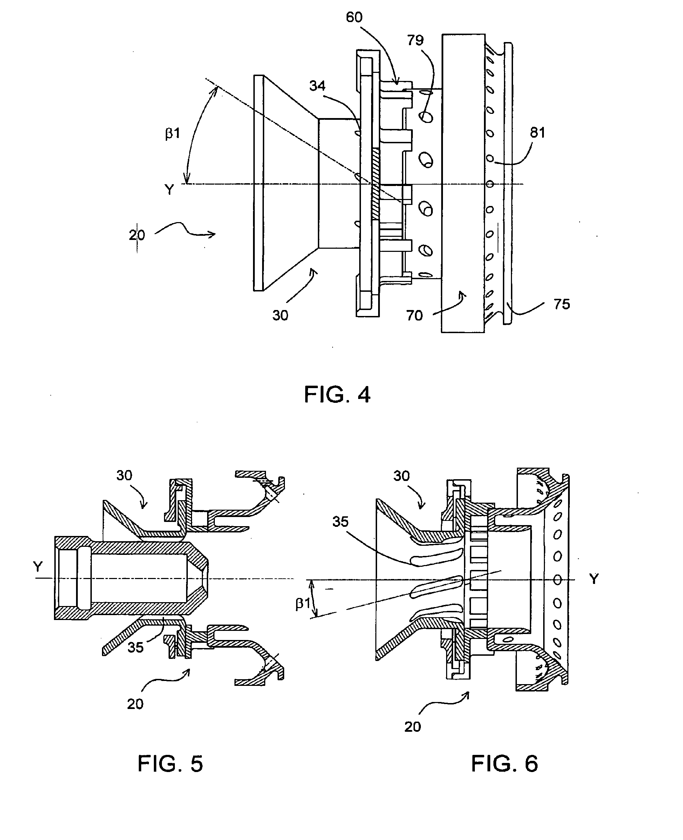

L'alimentation en air commence au niveau de la traversée coulissante 30. A cet effet, au moins une rangée d'orifices de purge 34 sont ménagés dans le rayon de raccordement entre la partie cylindrique 32 et le flasque annulaire 33. Ces orifices de purge 34 peuvent être réalisés par perçage. L'extrémité aval de ces orifices 34 est disposée de façon à être positionnée sur un cercle dont le diamètre est inférieur au diamètre intérieur 63 de la vrille radiale 60. Ils peuvent être inclinés d'un angle α1 selon la direction axiale et / ou d'un angle β1 selon la direction tangentielle à la partie cylindrique 32. Dans le cas où les orifices de purge 34 sont inclinés, les plages préférentielles d'angles sont comprises entre 0 et 45 ° pour l'inclinaison axiale et entre 0 et 60° pour l'inclinaison tangentielle. Les angles α1 et β1 sont indiqués sur les figures 3 et 4, la figure 4 présentant une vue schématique de côté d'un dispositif d'injection selon l'invention. L'inclinaison axiale α1 permet de contrôler l'écoulement de l'air, de réduire les risques de cokéfaction sur l'extrémité aval de l'injecteur 40 et permet une réduction de l'encombrement radial du dispositif d'injection en participant à l'optimisation de la section efficace de passage d'air recherchée. L'inclinaison axiale α1 permet de plus un meilleur contrôle de l'aérodynamique du bol. En particulier, elle permet un meilleur contrôle de la position du début de la zone de recirculation en aval de l'injecteur. L'inclinaison tangentielle β1 permet d'améliorer la vaporisation du carburant en créant des turbulences et d'optimiser la section efficace de passage d'air. Cette inclinaison tangentielle permet de plus d'augmenter les tourbillons en aval de l'injecteur en introduisant un écoulement tourbillonnaire supplémentaire.
Dans l'exemple donné ici, les orifices de purge 34 sont des perçages, mais ils pourraient tout aussi bien être réalisés sous la forme de rainures 35 disposées sur la surface interne de la partie cylindrique 32, comme illustré à la figure 5. Dans ce cas, les rainures 35 peuvent être ménagées axialement le long de la paroi cylindrique 32, ou en formant un angle β1 selon la direction tangentielle à la surface interne de la paroi cylindrique 32, comme illustré à la figure 6.

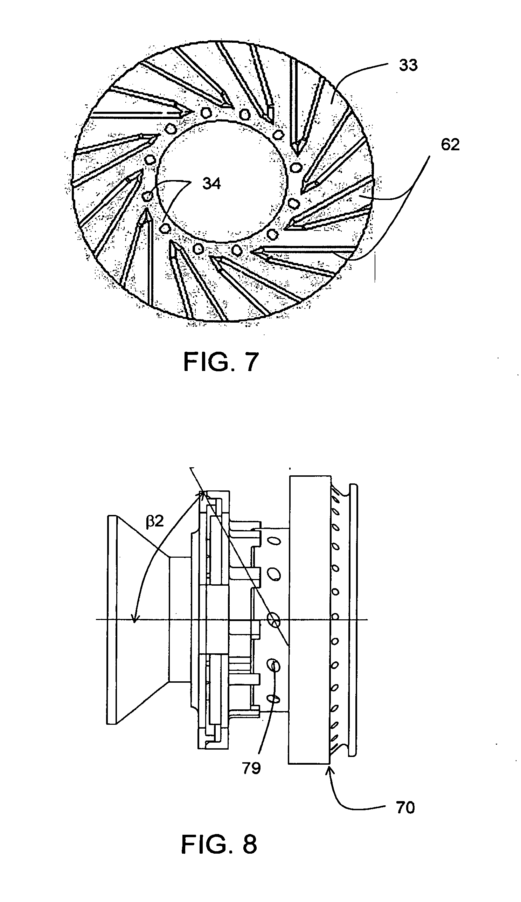

L'alimentation en air est poursuivie au niveau de la vrille radiale interne 60. Comme illustré aux figures 3 et 7, la vrille radiale interne 60 comporte des aubes 62 dirigeant l'air sous pression vers l'intérieur du dispositif d'injection 20 et plus précisément vers l'extrémité aval de l'injecteur 40. Ces aubes ne sont pas orientées radialement, mais ont une inclinaison tangentielle de façon à mettre l'air sous pression en rotation ce qui permet de créer un écoulement tourbillonnaire et d'améliorer la vaporisation du carburant. Préférentiellement, la vrille 60 et les orifices de purge 34 sont co-rotatifs, c'est à dire que l'air sous pression en sortie des orifices de purge 34 et en sortie des aubes 62 est mis en rotation dans le même sens. De façon tout à fait avantageuse, le nombre d'orifices de purge 34 est un sous multiple du nombre d'aubes 62. Il est alors très intéressant d'intercaler les orifices de purge 34 entre les aubes 62 de la vrille 60. En effet, une telle disposition permet de diminuer l'espace radial nécessaire à la réalisation, par exemple au perçage, de ces orifices. Ainsi, pour un même diamètre intérieur et donc un même diamètre d'injecteur, le diamètre extérieur des vrilles 60 peut être réduit.

De l'air sous pression est également introduit au niveau de la seconde paroi cylindrique externe 73 du bol 70. Selon l'art antérieur, il est connu de disposer, en aval de la vrille radiale interne 60 , une vrille radiale externe. La vrille radiale interne 60 injecte de l'air à l'intérieur du venturi 72, tandis que la vrille radiale externe injecte de l'air entre le venturi et la seconde paroi cylindrique externe du bol. Or l'encombrement radial de la vrille externe a un impact sur l'encombrement radial du dispositif d'injection et l'augmente de façon non négligeable.
Comme illustré notamment aux figures 3 et 4, le dispositif d'injection 20 selon l'invention comporte, sur la seconde paroi cylindrique externe 73 du bol 70, au moins une rangée de trous tourbillonnaires 79. Les trous tourbillonnaires 79 sont proches de l'extrémité amont de la seconde paroi cylindrique externe 73. Ils peuvent être inclinés selon la direction axiale, leur axe formant alors un angle α2 avec l'axe Y. De préférence, l'angle α2 est compris entre 30 et 90 degrés. Comme illustré à la figure 8, les trous tourbillonnaires peuvent aussi être inclinés d'un angle β 2 selon une direction tangentielle à la seconde paroi cylindrique 73. Les trous tourbillonnaires 79 ont le même rôle qu'une vrille radiale externe. Ils peuvent être ou non co-rotatifs avec la vrille radiale interne 60 et les orifices de purge 34. Dans le cas où les trous tourbillonnaires 79 sont co-rotatifs avec la vrille radiale interne 60, l'angle β2 est de préférence compris entre 0 et 90 degrés. Ils permettent d'une part d'amener de l'air de refroidissement sur le venturi 73 et, d'autre part, de prévenir tout phénomène de décollement de l'air au niveau du divergent 74 du bol 70 en alimentant en air la zone directement en aval en venturi. En effet, Les trous tourbillonnaires 79 permettent, dans un encombrement radial réduit, de reproduire les effets d'une vrille radiale. Pour un même effet, ils représentent une section efficace de passage d'air moindre, c'est à dire que leur alimentation en air sous pression nécessite un débit d'air plus faible qu'une vrille radiale ce qui est bénéfique pour le fonctionnement de la turbomachine.

L'alimentation en air sous pression du dispositif d'injection se termine au niveau du divergent 74 du bol 70 où sont ménagés, de façon connue, des orifices 80.

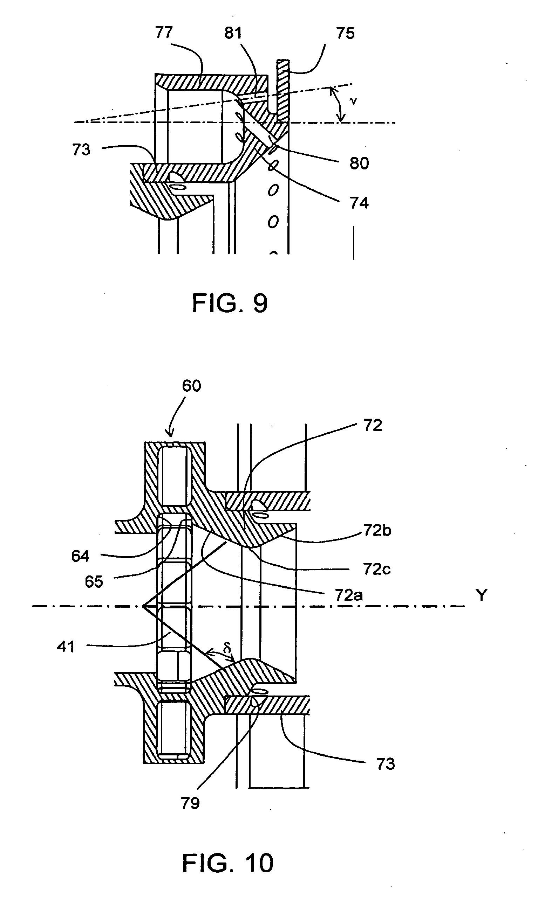

Au niveau du bol 70, la collerette 75 est directement exposée à la chaleur de la flamme et pour cette raison, doit être refroidie. De façon classique, le refroidissement de la collerette 75 est réalisé grâce à des orifices de refroidissement 81. Généralement, ces orifices de refroidissement 81 sont réalisés parallèlement à l'axe Y du dispositif d'injection 20 et traversent d'amont en aval la paroi de raccordement 76 du bol 70, de façon à ce que de l'air sous pression impacte la collerette 75 dans sa zone médiane. La collerette 75 guide ensuite l'air le long du déflecteur (non représenté) créant ainsi un film de refroidissement.
Afin de diminuer encore l'encombrement radial du bol 70 et donc du dispositif d'injection 20, selon l'invention, les orifices de refroidissement 81 peuvent être ménagés, comme illustré à la figure 9, dans le rayon de raccordement entre la paroi de raccordement 76 et l'anneau cylindrique 77 et avec une inclinaison selon la direction axiale. L'axe des orifices de refroidissement 81 forme alors un angle γ avec l'axe Y. L'angle γ doit être tel que l'air impacte la zone médiane de la collerette 75. De préférence γ est compris entre 0 et 60°. Une telle disposition permet de diminuer le diamètre extérieur de l'anneau cylindrique 77 tout en dirigeant de façon adéquate l'air pour le refroidissement de la collerette et du déflecteur.

Malgré un encombrement radial réduit, le dispositif d'injection 20 doit assurer les mêmes fonctions qu'un dispositif de l'art antérieur, telles qu'assurer une pulvérisation du carburant de bonne qualité, mais aussi respecter certaines contraintes, par exemple garantir que le carburant ne puisse pas remonter vers l'amont du dispositif d'injection, notamment au niveau de la vrille radiale 60. Ainsi, en plus des aménagements cités précédemment, qui permettent de diminuer l'encombrement radial du dispositif d'injection tout en optimisant la pulvérisation du carburant, il est intéressant d'aménager la géométrie du venturi 72.
Dans l'exemple illustré dans les figures, le venturi fait partie du bol 70. Cependant, et sans remettre en cause la description qui a été faite, il pourrait très bien être à relié la vrille 60. Une telle disposition est illustrée par exemple à la figure 10. Sur cette figure, le venturi 72 est lié par sa partie amont à la vrille 60. Sa surface interne comporte une première surface convergente 72a, reliée à une seconde surface divergente 72b, par un rayon de raccordement 72c. L'injecteur 40 envoie dans le dispositif d'injection 20 un cône de carburant 41 qui, selon le point de fonctionnement de la turbomachine, c'est à dire selon son régime de rotation notamment, impacte ou non le venturi 72. Pour les points de fonctionnement où le cône de carburant 41 impacte le venturi, lorsque le carburant impacte la surface interne du venturi, il ne doit pas pouvoir rebondir en direction de la vrille 60. Ceci impose que l'angle δ formé entre le cône de carburant 41 et la surface conique convergente 72b soit obtus. Un moyen d'avoir une bonne maîtrise de cet angle tout en limitant l'encombrement du venturi, est que la surface convergente 72a soit un cône de révolution d'axe Y. Avantageusement, la surface divergente 72b forme aussi un cône de révolution.
Par ailleurs, afin de guider l'écoulement de l'air issu de la vrille 60, des parois latérales amont 64 et aval 65 sont disposées dans le prolongement des aubes 62 de la vrille 60, au niveau de leurs extrémités internes. Le raccordement entre la paroi latérale aval 65 et la surface convergente 72a est effectué par une rupture de pente, afin d'éviter les remontées de carburant dans la vrille 60 par capillarité.

L'ensemble des aménagements selon l'invention permet, pour un même diamètre extérieur d'injecteur, d'obtenir un dispositif d'injection dont l'encombrement radial est diminué, tout en garantissant une bonne qualité de pulvérisation et en respectant les contraintes sur la remontée éventuelle de carburant, notamment dans la vrille radiale.

## Revendications

1. Dispositif d'injection d'un mélange d'air sous pression et de carburant dans une chambre de combustion d'une turbomachine, le dispositif d'injection ayant une symétrie de révolution autour d'un axe (Y) et comportant, disposés d'amont en aval dans le sens d'écoulement des gaz, une traversée coulissante (30) au centre de laquelle est positionné un injecteur (40), une coupelle annulaire (50) maintenant axialement la traversée coulissante (30), une vrille radiale interne (60) munie d'aubes (62) dirigeant l'air sous pression vers l'intérieur du dispositif d'injection (20), un venturi (72), la vrille radiale interne étant reliée par son extrémité aval à un bol (70), la traversée coulissante (30) comportant, disposés de l'amont vers l'aval, une partie conique convergente (31), se prolongeant en une partie cylindrique (32) raccordée à flasque annulaire (33) s'étendant radialement vers l'extérieur, le bol (70) comportant une paroi cylindrique externe (73) possédant une extrémité amont et une extrémité aval, la paroi cylindrique externe (73) se prolongeant au niveau de son extrémité aval par un divergent (74) muni, en aval, d'une collerette (75) ayant la forme d'un anneau s'étendant radialement vers l'extérieur, le divergent (74) du bol (70) étant relié, immédiatement en amont de la collerette (75), par une paroi de raccordement (76) à un anneau cylindrique (77), l'anneau cylindrique (77) et la paroi de raccordement (76) formant un bec de liaison orienté vers l'amont, la paroi de raccordement (76) du bec de liaison du bol étant munie d'une rangée d'orifices de refroidissement (81),
**caractérisé en ce qu'**au moins une rangée de trous tourbillonnaires (79) est ménagée sur la paroi cylindrique externe (73) du bol (70) près de l'extrémité amont de la paroi cylindrique externe (73),
et **en ce que** les orifices de refroidissement (81) sont inclinés axialement d'un angle y par rapport à l'axe (Y) du dispositif d'injection (20), et **en ce que** les trous tourbillonnaires (79) sont inclinés axialement d'un angle α2 par rapport à l'axe (Y) du dispositif d'injection (20)

2. Dispositif d'injection selon la revendication 1,
**caractérisé en ce qu'**au moins une rangée d'orifices de purge (34) est ménagée sur la traversée coulissante, au niveau du raccordement entre sa partie cylindrique (32) et son flasque annulaire (33).

3. Dispositif d'injection selon la revendication 2,
**caractérisé en ce que** les orifices de purge (34) sont inclinés axialement d'un angle α1 par rapport à l'axe (Y) du dispositif d'injection (20).

4. Dispositif d'injection selon la revendication 3,
**caractérisé en ce que** l'angle α1 est compris entre 0 et 45 degrés.

5. Dispositif d'injection selon l'une des revendications 2 ou 3,
**caractérisé en ce que** les orifices de purge (34) sont inclinés selon une direction tangentielle à la paroi cylindrique (32) de la traversée coulissante d'un angle β1 par rapport à l'axe (Y) du dispositif d'injection (20).

6. Dispositif d'injection selon la revendication 5,
**caractérisé en ce que** l'angle β1 est compris entre 0 et 60 degrés.

7. Dispositif d'injection selon l'une des revendications 5 ou 6,
**caractérisé en ce que** les orifices de purges (34) et les aubes (62) de la vrille radiale interne (60) sont co-rotatifs.

8. Dispositif d'injection selon l'une quelconque des revendications 2 à 7,
**caractérisé en ce que** la vrille radiale interne (60) comporte un nombre n d'aubes (62) et la traversée coulissante (30) comporte un nombre d'orifices de purge (34) qui est un sous multiple de n.

9. Dispositif d'injection selon l'une quelconque des revendications 2 à 8,
**caractérisé en ce que** les orifices de purges (34) sont intercalés entre les aubes (62).

10. Dispositif d'injection selon la revendication 1,
**caractérisé en ce que** l'angle α2 est compris entre 30 et 90 degrés.

11. Dispositif d'injection selon l'une des revendications 1 à 10,
**caractérisé en ce que** les trous tourbillonnaires (79) sont inclinés selon une direction tangentielle à la paroi cylindrique externe (73) du bol (70) d'un angle β2 par rapport à l'axe (Y) du dispositif d'injection (20).

12. Dispositif d'injection selon la revendication 11,
**caractérisé en ce que** l'angle β2 est compris entre 0 et 90 degrés.

13. Dispositif d'injection selon l'une des revendications 11 ou 12,
**caractérisé en ce que** les trous tourbillonnaires (79) et les aubes (62) de la vrille radiale interne (60) sont co-rotatifs.

14. Dispositif d'injection selon l'une des revendications 11 ou 12,
**caractérisé en ce que** les trous tourbillonnaires (79) et les aubes (62) de la vrille radiale interne (60) sont contrarotatifs.

15. Dispositif d'injection selon l'une des revendications précédentes,
**caractérisé en ce que** les orifices de refroidissement (81) comportent une extrémité aval disposée en face et sensiblement à mi-hauteur de la collerette (75) du bol (70).

16. Dispositif d'injection selon l'une quelconque des revendications 1 à 15,
**caractérisé en ce que** le venturi (72) comporte une surface interne composée d'une première surface convergente (72a) reliée à une seconde surface divergente (72b) par un rayon de raccordement (72c), et **en ce que** la première surface convergente (72a) forme un cône de révolution ayant un axe confondu avec celui du dispositif d'injection (Y).

17. Dispositif d'injection selon la revendication 16,
**caractérisé en ce que** la seconde surface divergente (72b) du venturi (72) forme un cône de révolution ayant un axe confondu avec celui du dispositif d'injection (Y).

18. Chambre de combustion comprenant une paroi interne, une paroi externe, un fond de chambre **caractérisée en ce qu'**elle est munie d'au moins un dispositif d'injection selon l'une quelconque des revendications précédentes.

19. Turbomachine munie d'une chambre de combustion selon la revendication 18.

## Patentansprüche

1. Vorrichtung zum Einspritzen eines Gemischs aus Druckluft und Treibstoff in eine Brennkammer einer Turbomaschine, wobei die Einspritzvorrichtung eine Rotationssymmetrie um eine Achse (Y) aufweist und, von stromauf nach stromab in der Strömungsrichtung der Gase angeordnet, eine Schiebedurchführung (30), in deren Mitte ein Injektor (40) positioniert ist, eine ringförmige Manschette (50), welche die Schiebedurchführung (30) axial hält, einen mit Schaufeln (62) ausgestatteten inneren radialen Verwirbler (60), der die Druckluft zum Inneren der Einspritzvorrichtung (20) leitet, ein Venturi-Rohr (72) umfasst, wobei der innere radiale Verwirbler über sein stromabwärtiges Ende mit einer Schale (70) verbunden ist, wobei die Schiebedurchführung (30), von stromauf nach stromab angeordnet, einen konvergenten konischen Teil (31), der als ein zylindrischer Teil (32) fortgesetzt ist, welcher mit einem radial nach außen verlaufenden Ringflansch (33) verbunden ist, umfasst, wobei die Schale (70) eine zylindrische Außenwand (73), die ein stromaufwärtiges Ende und ein stromabwärtiges Ende besitzt, umfasst, wobei die zylindrische Außenwand (73) sich im Bereich ihres stromabwärtigen Endes durch einen divergenten Teil (74) fortsetzt, der stromab mit einem Kragen (75), welcher die Form eines radial nach außen verlaufenden Rings aufweist, ausgestattet ist, wobei der divergente Teil (74) der Schale (70) direkt stromauf des Kragens (75) über eine Verbindungswand (76) mit einem zylindrischen Ring (77) verbunden ist, wobei der zylindrische Ring (77) und die Verbindungswand (76) eine nach stromauf gerichtete Verbindungsnase bilden, wobei die Verbindungswand (76) der Verbindungsnase der Schale mit einer Reihe von Kühlöffnungen (81) versehen ist,
**dadurch gekennzeichnet, dass** wenigstens eine Reihe von Wirbellöchern (79) an der zylindrischen Außenwand (73) der Schale (70) nahe dem stromaufwärtigen Ende der zylindrischen Außenwand (73) ausgebildet ist, und
dass die Kühlöffnungen (81) um einen Winkel γ gegenüber der Achse (Y) der Einspritzvorrichtung (20) axial geneigt sind, und dass die Wirbellöcher (79) um einen Winkel α2 gegenüber der Achse (Y) der Einspritzvorrichtung (20) axial geneigt sind.

2. Einspritzvorrichtung nach Anspruch 1, **dadurch gekennzeichnet, dass** wenigstens eine Reihe von Ablassöffnungen (34) an der Schiebedurchführung im Bereich der Verbindung zwischen ihrem zylindrischen Teil (32) und ihrem Ringflansch (33) ausgebildet ist.

3. Einspritzvorrichtung nach Anspruch 2, **dadurch gekennzeichnet, dass** die Ablassöffnungen (34) um einen Winkel α1 gegenüber der Achse (Y) der Einspritzvorrichtung (20) axial geneigt sind.

4. Einspritzvorrichtung nach Anspruch 3, **dadurch gekennzeichnet, dass** der Winkel α1 zwischen 0 und 45 Grad beträgt.

5. Einspritzvorrichtung nach einem der Ansprüche 2 oder 3, **dadurch gekennzeichnet, dass** die Ablassöffnungen (34) in einer zu der zylindrischen Wand (32) der Schiebedurchführung tangentialen Richtung um einen Winkel β1 gegenüber der Achse (Y) der Einspritzvorrichtung (20) geneigt sind.

6. Einspritzvorrichtung nach Anspruch 5, **dadurch gekennzeichnet, dass** der Winkel β1 zwischen 0 und 60 Grad beträgt.

7. Einspritzvorrichtung nach einem der Ansprüche 5 oder 6, **dadurch gekennzeichnet, dass** die Ablassöffnungen (34) und die Schaufeln (62) des inneren radialen Verwirblers (60) gleichsinnig rotieren.

8. Einspritzvorrichtung nach einem der Ansprüche 2 bis 7, **dadurch gekennzeichnet, dass** der innere radiale Verwirbler (60) eine Anzahl n von Schaufeln (62) umfasst und die Schiebedurchführung (30) eine Anzahl von Ablassöffnungen (34), die ein Untervielfaches von n ist, umfasst.

9. Einspritzvorrichtung nach einem der Ansprüche 2 bis 8, **dadurch gekennzeichnet, dass** die Ablassöffnungen (34) zwischen den Schaufeln (62) eingefügt sind.

10. Einspritzvorrichtung nach Anspruch 1, **dadurch gekennzeichnet, dass** der Winkel α2 zwischen 30 und 90 Grad beträgt.

11. Einspritzvorrichtung nach einem der Ansprüche 1 bis 10, **dadurch gekennzeichnet, dass** die Wirbellöcher (79) in einer zu der zylindrischen Außenwand (73) der Schale (70) tangentialen Richtung um einen Winkel β2 gegenüber der Achse (Y) der Einspritzvorrichtung (20) geneigt sind.

12. Einspritzvorrichtung nach Anspruch 11, **dadurch gekennzeichnet, dass** der Winkel β2 zwischen 0 und 90 Grad beträgt.

13. Einspritzvorrichtung nach einem der Ansprüche 11 oder 12, **dadurch gekennzeichnet, dass** die Wirbellöcher (79) und die Schaufeln (62) des inneren radialen Verwirblers (60) gleichsinnig rotieren.

14. Einspritzvorrichtung nach einem der Ansprüche 11 oder 12, **dadurch gekennzeichnet, dass** die Wirbellöcher (79) und die Schaufeln (62) des inneren radialen Verwirblers (60) gegenläufig sind.

15. Einspritzvorrichtung nach einem der vorhergehenden Ansprüche, **dadurch gekennzeichnet, dass** die Kühlöffnungen (81) ein stromabwärtiges Ende umfassen, das dem Kragen (75) der Schale (70) gegenüber und im Wesentlichen auf dessen halber Höhe angeordnet ist.

16. Einspritzvorrichtung nach einem der Ansprüche 1 bis 15, **dadurch gekennzeichnet, dass** das Venturi-Rohr (72) eine Innenfläche umfasst, die aus einer konvergenten ersten Fläche (72a) besteht, die mit einer divergenten zweiten Fläche (72b) über einen Übergangsradius (72c) verbunden ist, und dass die konvergente erste Fläche (72a) einen Rotationskegel mit einer Achse, die mit derjenigen der Einspritzvorrichtung (Y) verschmolzen ist, bildet.

17. Einspritzvorrichtung nach Anspruch 16, **dadurch gekennzeichnet, dass** die divergente zweite Fläche (72b) des Venturi-Rohrs (72) einen Rotationskegel mit einer Achse, die mit derjenigen der Einspritzvorrichtung (Y) verschmolzen ist, bildet.

18. Brennkammer mit einer Innenwand, einer Außenwand, einem Kammerboden, **dadurch gekennzeichnet, dass** sie mit wenigstens einer Einspritzvorrichtung nach einem der vorhergehenden Ansprüche ausgestattet ist.

19. Turbomaschine, die mit einer Brennkammer nach Anspruch 18 ausgestattet ist.

## Claims

1. A device for injecting a mixture of pressurized air and fuel into a combustion chamber of a turbomachine, the injection device having a symmetry of revolution about an axis (Y) and comprising, arranged from upstream to downstream in the gas flow direction, a sliding bushing (30) at the center of which is positioned an injector (40), an annular cup (50) maintaining the sliding bushing (30) axially, an internal radial swirler (60) provided with vanes (62) directing the pressurized air toward the inside of the injection device (20), a venturi (72), the internal radial swirler being connected by its downstream end to a bowl (70), the sliding bushing (30) comprising, arranged from upstream to downstream, a convergent conical portion (31) continuing into a cylindrical portion (32) connected to an annular flange (33) extending radially outward, the bowl (70) comprising an external cylindrical wall (73) having an upstream end and a downstream end, the external cylindrical wall (73) being continued at its downstream end by a divergent (74) provided, downstream, with a collar (75) having the form of a ring extending radially outward, the divergent (74) of the bowl (70) being connected, immediately upstream of the collar (75), by a connecting wall (76) to a cylindrical ring (77), the cylindrical ring (77) and the connecting wall (76) forming a connection rim oriented in the upstream direction, the connecting wall (76) of the connection rim of the bowl being provided with a row of cooling orifices (81) **characterized in that** at least one row of vortex holes (79) is formed in the external cylindrical wall (73) of the bowl (70) close to the upstream end of the external cylindrical wall (73), and **in that** the cooling orifices (81) are inclined axially at an angle γ to the axis (Y) of the injection device (20), and **in that** the vortex holes (79) are inclined axially at an angle α2 to the axis (Y) of the injection device (20).

2. The injection device according to claim 1, **characterized in that** at least one row of purge orifices (34) is formed in the sliding bushing at the location of the connection between its cylindrical portion (32) and its annular flange (33).

3. The injection device according to claim 2, **characterized in that** the purge orifices (34) are inclined axially at an angle α1 to the axis (Y) of the injection device (20).

4. The injection device according to claim 3, **characterized in that** the angle α1 is between 0 and 45 degrees.

5. The injection device according to claim 2 or 3, **characterized in that** the purge orifices (34) are inclined in a direction tangential to the cylindrical wall (32) of the sliding bushing at an angle β1 to the axis (Y) of the injection device (20).

6. The injection device according to claim 5, **characterized in that** the angle β1 is between 0 and 60 degrees.

7. The injection device according to claim 5 or 6, **characterized in that** the purge orifices (34) and the vanes (62) of the internal radial swirler (60) are co-rotating.

8. The injection device according to any one of claims 2 to 7, **characterized in that** the internal radial swirler (60) has a number n of vanes (62) and the sliding bushing (30) has a number of purge orifices (34) which is a submultiple of n.

9. The injection device according to any one of claims 2 to 8, **characterized in that** the purge orifices (34) are interposed between the vanes (62).

10. The injection device according to claim 1, **characterized in that** the angle α2 is between 30 and 90 degrees.

11. The injection device according to one of claims 1 to 10, **characterized in that** the vortex holes (79) are inclined in a direction tangential to the external cylindrical wall (73) of the bowl (70) at an angle β2 to the axis (Y) of the injection device (20).

12. The injection device according to claim 11, **characterized in that** the angle β2 is between 0 and 90 degrees.

13. The injection device according to one of claims 11 or 12, **characterized in that** the vortex holes (79) and the vanes (62) of the internal radial swirler (60) are co-rotating.

14. The injection device according to one of claims 11 or 12, **characterized in that** the vortex holes (79) and the vanes (62) of the internal radial swirler (60) are counter-rotating.

15. The injection device according to one of the preceding claims, **characterized in that** the cooling orifices (81) have a downstream end arranged opposite to and substantially at the mid-height level of the collar (75) of the bowl (70).

16. The injection device according to any one of claims 1 to 15, **characterized in that** the venturi (72) has an internal surface composed of a first convergent surface (72a) connected to a second divergent surface (72b) by a connecting radius (72c), and **in that** the first convergent surface (72a) forms a cone of revolution having an axis coincident with that of the injection device (Y).

17. The injection device according to claim 16, **characterized in that** the second divergent surface (72b) of the venturi (72) forms a cone of revolution having an axis coincident with that of the injection device (Y).

18. A combustion chamber comprising an internal wall, an external wall, and a chamber end wall, **characterized in that** it is provided with at least one injection device according to any one of the preceding claims.

19. A turbomachine provided with a combustion chamber according to claim 18.
